# EUROPÄISCHE PATENTSCHRIFT

(11) **EP 0 990 153 B1**
(45) Veröffentlichungstag und Bekanntmachung des Hinweises auf die Patenterteilung: **10.12.2003**
(21) Anmeldenummer: 98934951.9
(22) Anmeldetag: 10.06.1998
(51) Int. Cl.: G01N 30/60, B01D 15/08

(54) **UMMANTELUNG FÜR MONOLITHISCHE SORBENTIEN**
JACKET FOR MONOLITHIC SORBENTS
ENVELOPPE POUR ABSORBANTS MONOLITHIQUES

(30) Priorität: 20.06.1997 DE 19726164
(43) Veröffentlichungstag der Anmeldung: 05.04.2000
(73) Patentinhaber: MERCK PATENT GmbH, 64293 Darmstadt (DE)
(72) Erfinder: LUBDA, Dieter, D-64625 Bensheim (DE); WIELAND, Gerhard, D-64625 Bensheim (DE); CABRERA, Karin, D-63303 Dreieich (DE); HARDERS, Hans-Dieter, D-64287 Darmstadt (DE); DICKS, Edith, D-64297 Darmstadt (DE); SÄTTLER, Günther, D-64354 Reinheim (DE); NEUROTH, Willi, D-64380 Ro dorf (DE); HEUSER, Dieter, D-41469 Neuss (DE)
(86) Internationale Anmeldenummer: EP9803525
(87) Internationale Veröffentlichungsnummer: WO98059238

(56) Entgegenhaltungen:
- WO-A-94/19687
- WO-A-95/03256
- CH-A- 507 724
- DE-A- 1 955 276
- US-A- 5 334 310
- Q CHING WANG ET AL: "MACROPOROUS POLYMERIC STATIONARY-PHASE ROD AS CONTINUOUS SEPARATIONMEDIUM FOR REVERSED-PHASE CHROMATOGRAPHY" ANALYTICAL CHEMISTRY, Bd. 65, Nr. 17, 1. September 1993, Seiten 2243-2248, XP000416612
- PATENT ABSTRACTS OF JAPAN vol. 015, no. 071 (P-1168), 19. Februar 1991 & JP 02 291963 A (MATSUNAMI GLASS KOGYO KK), 3. Dezember 1990

## Beschreibung

Gegenstand der Erfindung sind Ummantelungen für monolithische Sorbentien für die Chromatographie.

Beim Packen von Chromatographiesäulen mit partikulären Sorbentien wird erreicht, daß das Sorbensbett am Mantel der Säule dicht anliegt. Ersetzt man, wie es in WO 94/19 687 und in WO 95/03 256 offenbart ist, partikuläre durch monolithische Sorbentien, so ergibt sich das Problem, den Mantel des Sorbens flüssigkeitsdicht, druckstabil und gegen die Elutionsmittel inert abzudichten. Nur so ist gewährleistet, daß das Elutionsmittel ausschließlich durch das Sorbens fließt. F. Svec und J.M. Frechet (1992) Anal. Chem. **64**, Seiten 820 - 822, beschreiben, wie ein monolithisches Sorbens in ein Rohr einpolymerisiert werden kann. Dieses Prinzip ist bei keramischen Sorbentien nur bedingt anwendbar, da der Grünling bei den anschließenden Brenn- und Calcinierungsschritten schrumpft: Nur wenn der Innendurchmesser des Rohres hinreichend klein, d.h. deutlich unter einem Zentimeter, ist, kann dieses Verfahren angewandt werden. Eine Halterung, die auch für dickere monolithische Sorbentien angewandt werden kann, ist in WO 94/19 687 offenbart: Ein Mantel aus Teflon umhüllt den Keramikstab. Damit dieser Mantel flüssigkeitsdicht abschließt, auch wenn im Innern der Betriebsdruck der Chromatographieeinrichtung angelegt ist, befindet sich der mit Teflon ummantelte Keramikstab in einem Metallrohr mit größerem Innendurchmesser, in dem ein Gegendruck erzeugt wird.

DE 1 955 276 offenbart eine Trennsäule für die Flüssig-Flüssig-Chromatographie mit einer druckfesten Ummantelung aus Metall. Zwischen dem Sorbens und dem Metallmantel befindet sich eine korrosionsfeste Kunststoffschicht.

Die in WO 94/19 687 und DE 1 955 276 offenbarten Einrichtungen sind kompliziert aufgebaut. Es besteht also die Aufgabe, vereinfachte Halterungen und Ummantelungen für monolithische Sorbentien bereitzustellen.

Gegenstand der Erfindung sind ummantelte monolithische Sorbentien in Form eines porösen keramischen Formkörpers oder in Form eines Formkörpers aus einem Polymerisat, wobei die Mantelfläche des genannten monolithischen Sorbens flüssigkeitsdicht mit einem druckfestent Kunststoffmantel aus Polyetherketon derart umschlossen ist, dass gewährleistet ist, dass ein Elutionsmittel nur durch das Sorbens fließen kann. Insbesondere kann das Sorbens untereinander verbundene Makroporen sowie Mesoporen in den Wänden der Makroporen aufweisen, wobei der Durchmesser der Makroporen einen Medianwert größer als 0,1 µm aufweist, und wobei der Durchmesser der Mesoporen einen Medianwert zwischen 2 und 100 nm aufweist, wobei die Mantelfläche des genannten monolithischen Sorbens flüssigkeitsdicht mit einem druckfesten Kunststoffmantel umschlossen ist.

Gegenstand der Erfindung ist auch eine chromatographische Säule oder eine chromatographische Kartusche enthaltend ein ummanteltes monolithisches Sorbens in Form eines porösen keramischen Formkörpers oder in Form eines Formkörpers aus einem Polymerisat, wobei die Mantelfläche des genannten monolithischen Sorbens flüssigkeitsdicht mit einem druckfestent Kunststoffmantel aus Polyetherketon derart umschlossen ist, dass gewährleistet ist, dass ein Elutionsmittel nur durch das Sorbens fließen kann.

Gegenstand der Erfindung ist ferner die Verwendung eines erfindungsgemäßen monolithischen Sorbens in Form eines porösen keramischen Formkörpers oder in Form eines Formkörpers aus einem Polymerisat, wobei die Mantelfläche des genannten monolithischen Sorbens flüssigkeitsdicht mit einem druckfestent Kunststoffmantel aus Polyetherketon derart umschlossen ist, dass gewährleistet ist, dass ein Elutionsmittel nur durch das Sorbens fließen kann, bei der chromatographischen Trennung mindestens zweier Substanzen.

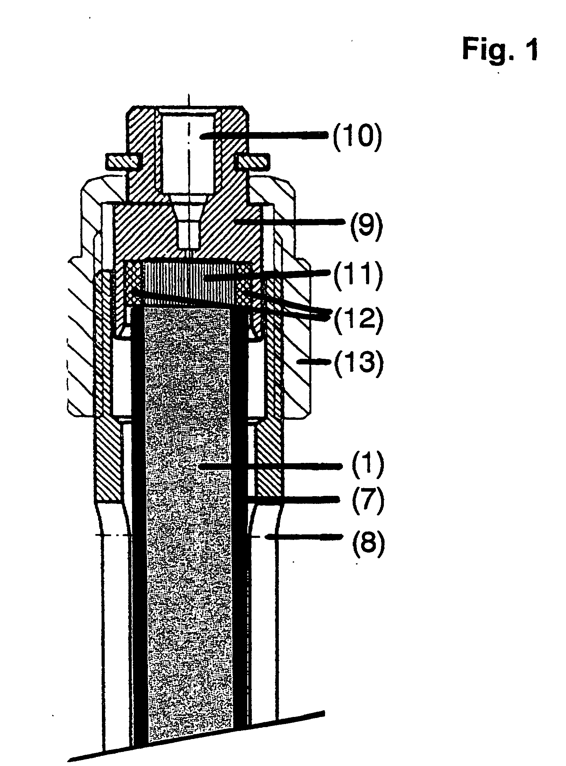

In der Abbildung 1 ist ein erfindungsgemäß ummanteltes monolithisches Sorbens in einer Halterung dargestellt; die ober Hälfte ist dargestellt.

Monolithische Sorbentien sind grundsätzlich aus der Literatur bekannt; dazu gehören vor allem poröse keramische Formkörper, wie sie in WO 94/19 687 und in WO 95/03 256 offenbart sind. Von dem Begriff monolithische Sorbentien werden im weiteren Sinne auch Formköper aus Polymerisaten umfaßt, wie sie von F. Svec und J.M. Frechet (1992) Anal. Chem. **64**, Seiten 820 - 822, und von S. Hjerten et al. (1989) J. Chromatogr. **473**, Seiten 273 - 275, beschrieben wurden. Besonders bevorzugt sind monolithische Sorbentien auf der Grundlage von porösen Formkörpern, die untereinander verbundene Makroporen sowie Mesoporen in den Wänden der Makroporen aufweisen, wobei der Durchmesser der Makroporen einen Medianwert größer als 0,1 µm aufweist, und wobei der Durchmesser der Mesoporen einen Medianwert zwischen 2 und 100 nm aufweist.

Monolithische Sorbentien bestehen also aus Materialien, wie sie für partikuläre Sorbentien im Gebrauch sind. In vielen Fällen (z.B. SiO₂) können diese Sorbentien ohne weiteres für chromatographische Trennungen verwendet werden. Häufiger jedoch werden die Basisträger derivatisiert, um die Trenneigenschaften zu verbessern; dabei werden zusätzliche Gruppierungen eingeführt, die unter der Bezeichnung Separationseffektoren zusammengefaßt werden.

Separationseffektoren und Verfahren zu ihrer Einführung in den Basisträger sind dem Fachmann grundsätzlich bekannt. Beispiele für Reaktionen, mit denen Separationseffektoren eingeführt werden können, sind:
a) Die Derivatisierung mit Silanderivaten der Formel I

   SiXₙR¹₍₃₋ₙ₎R² 1

   worin
   - X: Methoxy, Ethoxy, Halogen oder Aminoderivate
   - R¹: C₁ - C₅ -Alkyl,
   - n: 1, 2 oder 3
   bedeuten und
   - R²: eine der im folgenden angegebene Bedeutungen besitzt:
   - a1): unsubstituiertes oder substituiertes Alkyl oder Aryl, wie z.B. n-Octadecyl, n-Octyl, Benzyl- oder Cyanopropyl;
   - a2): anionische oder saure Reste, wie z.B. Carboxypropyl;
   - a3): kationische oder basische Reste, wie z.B. Aminopropyl, Diethylaminopropyl oder Triethylammoniumpropyl;
   - a4): hydrophile Reste, wie z.B. (2,3-Dihydroxypropyl)-oxypropyl;
   - a5): bindungsfähige aktivierte Reste, wie z.B. (2,3-Epoxypropyl)-oxypropyl.
b) Die Adsorption oder chemische Bindung von Polymeren wie Polybutadien, Siloxanen, Polymeren auf der Grundlage von Styrol/ Divinylbenzol, von (Meth)acrylsäurederivaten oder von anderen Vinylverbindungen, sowie von Peptiden, Proteinen, Polysacchariden und Polysaccharidderivaten an dem Basisträger;
c) Die chemische Bindung von unter b) genannten Polymeren über die unter a) genannten Derivate; dazu gehören Pfropfpolymerisate von Poly(meth)acrylsäurederivaten auf diolmodifiziertem Kieselgel nach EP-B-0 337 144.
d) Die Adsorption oder chemische Bindung von chiralen Phasen, wie z.B. von Aminosäurederivaten, Peptiden oder Proteinen, oder von Cyclodextrinen, Polysacchariden oder Polysaccharidderivaten.

Weitere gebräuchliche Derivatisierungsmöglichkeiten und Derivatisierungsverfahren sind dem Fachmann bekannt und in gängigen Handbüchern wie Unger, K.K. (ed) Porous Silica, Elsevier Scientific Publishing Company (1979) oder Unger, K.K. Packings and Stationary Phases in Chromatographic Techniques, Marcel Dekker (1990) beschrieben.

Weitere Beispiele für verschiedene Separationseffektoren und für Verfahren, die Separationseffektoren in monolithische Sorbentien einzuführen, sind in den folgenden Druckschriften genannt:
a) Aus DE 38 11 042 sind unter anderem Monomere bekannt, die zur Herstellung von Ionenaustauschern geeignet sind; dazu gehören beispielsweise Acrylsäure, N-(Sulfoethyl)-acrylamid, 2-Acrylamido-2-methylpropansulfonsäure, N,N-Dimethylaminoethyl-acrylamid, N,N-Diethylaminoethyl-acrylamid, sowie Trimethylammoniumethyl-acrylamid.
   Andere in dieser Druckschrift genannte Monomere erlauben die Bindung von Affinitätsliganden oder von Enzymen, oder eignen sich für reversed phase Chromatographie: dazu gehören beispielsweise Acrylsäure, Acrylamid, Allylamin oder Acrylnitril.
b) Aus DE 43 10 964 sind Monomere bekannt, die einen Oxiranring, einen Azlactonring oder eine Gruppierung enthalten, die in einen Azlactonring umgesetzt werden kann. Polymere, die derartige Monomere enthalten, sind besonders gut für die Bindung von Affinitätsliganden oder von Enzymen geeignet. Affinitätsliganden sind beispielhaft in DE 43 10 964 offenbart.

Weiterhin können die Epoxidgruppen in derartigen Polymeren in vorteilhafter Weise weiter umgesetzt werden, wodurch Ionenaustauscher, thiophile Sorbentien oder Sorbentien für die Metallchelat- oder die hydrophobe Chromatographie bereitgestellt werden. Dabei werden beispielsweise Phosphorsäure, Diethylamin, Trimethylamin, schweflige Säure oder auch Komplexbildner wie Iminodiessigsäure an den Oxiranring addiert.

Die Herstellung von thiophilen Sorbentien und von Sorbentien für die Metallchelatchromatographie ist in DE 43 10 964 offenbart.

In DE 43 33 674 und in DE 43 33 821 sind derartige Umsetzungen, mit derer Hilfe Ionenaustauscher bereitgestellt werden können, offenbart.

In DE 43 23 913 werden Sorbentien für die hydrophobe Interaktionschromatographie beschrieben.

Unter dem Begriff monolithisches Sorbens wird erfindungsgemäß sowohl ein poröser Grundkörper als auch ein mit Separationseffektoren derivierter poröser Grundkörper verstanden.

Die Lösung des Aufgabe besteht darin, eine Kunststoffummantelung aus Polyetherketon, z.B. Polyetheretherketon (PEEK), die hinreichend druckstabil und lösungsmittelfest ist, auf das monolithische Sorbens aufzubringen. Diese Kunststoffe können als Pulver auf das monolithische Sorbens aufgebracht werden und anschließend geschmolzen oder gesintert werden.

Eine andere Möglichkeit, derartig ummantelte monolithische Sorbentien herzustellen, besteht darin, den Kunststoff auf den Keramikstab aufzuextrudieren. Dabei wird parallel zur Extrusion eines Schlauches durch einen Querkopf der Keramikstab zugeführt. Der frisch extrudierte Schlauch umschließt (heiß) den Keramikstab und wird z.B. durch eine Andrückvorrichtung zusätzlich an den Keramikstab angedrückt. Dabei ist es auch möglich, einen vorgeformten Schlauch zu erwärmen, statt einen Schlauch durch Extrusion zu erzeugen. Durch dieses mechanische Andrücken und das zusätzliche Sintern beim Abkühlen entsteht eine dichte Ummantelung. Es ist auch möglich, den Keramikstab in einen vorgefertigten Schlauch, dessen Innendurchmesser geringfügig größer ist, als der Außendurchmesser des Keramikstabes einzubringen und dann den Kunststoff zu erwärmen, so daß der Schlauch auf den Enddurchmesser abgezogen werden kann und dabei den Keramikstab dicht umschließt.

Bei einer weiteren Variante wird die Kunststoffummantelung durch Flammspritzen oder ein- oder mehrfaches Aufschrumpfen erzeugt.

Arbeitsverfahren und -parameter sind dem Fachmann der Kunststoffverarbeitung geläufig oder können nach üblichen Verfahren optimiert werden.

Grundsätzlich ist es möglich, auch die letztgenannten Varianten der Ummantelung nach einer vorherigen ersten Ummantelung mit z.B. einem Schrumpfschlauch oder ähnlichem nicht druckstabilem Material auszuführen.

Das druckfest ummantelte monolithische Sorbens kann mit Endstücken zum Anschluß von Elutionsmittelzu- und -ableitungen versehen werden (Chromatographiesäule mit monolithischem Sorbens). Endstücke können aufgeschraubt, aufgeklebt oder aufgeschrumpft werden.

Es ist auch möglich, das druckfest ummantelte monolithische Sorbens als chromatographische Kartusche für die Aufnahme in eine Kartuschenhalterung auszurüsten. Dazu kann die Ummantelung beispielsweise mit einer Ringnut versehen werden, in die entsprechende Vorsprünge der Kartuschenhalterung eingreifen. Dichtungselemente an den Enden können beispielsweise eingeklebt oder eingepreßt werden.

Geeignete Konstruktionen für chromatographische Säulen oder Kartuschen, sowie deren Endstücken sind dem Fachmann geläufig und in der einschlägigen Literatur beschrieben; so werden beispielsweise in EP 0 205 002, EP 0 268 185 und EP 0 068 343 Kartuschen und Kartuschenhalterungen offenbart.

Im folgenden ist beispielhaft die Ummantelung eines monolithischen Sorbens mit PEEK beschrieben: Ein monolithischer Formkörper (100 × 7,2 mm) wird in ein Rohr aus PEEK (Innendurchmesser 7,4 mm, Wandstärke 1, 5 mm) eingebracht. Kunststoffrohr und Formkörper werden auf ca. 300 - 400 °C erwärmt und das Kunststoffrohr in einer Andrückvorrichtung dicht auf den Formkörper angedrückt. Nach dem Erkalten wird der ummantelte Formkörper auf 83 mm abgelängt.

Ein derartig ummanteltes monolithisches Sorbens kann direkt in eine Kartuschenhalterung, wie sie beispielhaft in Abbildung 1 dargestellt ist, eingebracht werden. Dargestellt ist die obere Hälfte der Vorrichtung. Das monolithische Sorbens (1) ist von dem Kunststoffmantel (7) flüssigkeitsdicht umhüllt. Der Frontfläche des monolithischen Sorbens liegt eine Verteilerfritte (11) auf, auf die Stirnseite des Kunststoffmantels stützt sich eine ringförmige Dichtung (12). Verteilerfritte (11) und Dichtung (12) liegen in einer Ausfräsung der Endstückes (9), das eine Anschlußvorrichtung (10) für Elutionsmittelzu- und -ablauf aufweist. Das ummantelte monolithische Sorbens steckt in einem Rohr (8), beispielsweise aus Aluminium oder Edelstahl, das mit einer Schraubkappe (13) abgeschlossen ist. Die Schraubkappe (13) drückt das Endstück (9) gegen Kunststoffmantel (7) und monolithisches Sorbens (1).

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

## Patentansprüche

1. Ummanteltes monolithisches Sorbens in Form eines porösen keramischen Formkörpers oder in Form eines Formkörpers aus einem Polymerisat, **dadurch gekennzeichnet, dass** die Mantelfläche des genannten monolithischen Sorbens flüssigkeitsdicht mit einem druckfesten Kunststoffmantel aus Polyetherketon derart umschlossen ist, dass gewährleistet ist, dass ein Elutionsmittel nur durch das Sorbens fließen kann.

2. Ummanteltes monolithisches Sorbens nach Anspruch 1, **dadurch gekennzeichnet, dass** das Sorbens untereinander verbundene Makroporen sowie Mesoporen in den Wänden der Makroporen aufweist, wobei der Durchmesser der Makroporen einen Medianwert größer als 0,1 µm aufweist, und wobei der Durchmesser der Mesoporen einen Medianwert zwischen 2 und 100 nm aufweist.

3. Chromatographiesäule oder chromatographische Kartusche enthaltend ein ummanteltes monolithisches Sorbens nach einem der Ansprüche 1 oder 2.

4. Verwendung eines ummantelten monolithischen Sorbens nach einem der Ansprüche 1 oder 2 bei der chromatographischen Trennung mindestens zweier Substanzen.

## Claims

1. Encased monolithic sorbent in the form of a porous ceramic moulding or in the form of a moulding made from a polymer, **characterized in that** the outer surface of said monolithic sorbent is surrounded in a liquid-impermeable manner by a pressure-resistant plastic casing made of polyether ketone in such a manner that it is ensured that an eluent can only flow through the sorbent.

2. Encased monolithic sorbent according to Claim 1, **characterized in that** the sorbent has interconnected macropores and mesopores in the walls of the macropores, where the diameter of the macropores has a median value of greater than 0.1 µm and where the diameter of the mesopores has a median value of between 2 and 100 nm.

3. Chromatographic column or chromatographic cartridge comprising an encased monolithic sorbent according to either of Claims 1 and 2.

4. Use of an encased monolithic sorbent according to either of Claims 1 and 2 in the chromatographic separation of at least two substances.

## Revendications

1. Adsorbant monolithique recouvert sous forme d'un corps formé en céramique poreuse ou sous forme d'un corps formé à partir d'un polymérisat, **caractérisé en ce que** la surface de revêtement dudit adsorbant monolithique est entourée de façon étanche aux liquides avec un revêtement plastique résistant à la pression en polyéther-cétone, de telle façon que soit garanti le fait qu'un éluant peut seulement couler à travers l'adsorbant.

2. Adsorbant monolithique recouvert selon la revendication 1, **caractérisé en ce que** l'adsorbant présente entre autres des macropores liés aussi bien que des mésopores dans les parois des macropores, moyennant quoi le diamètre des macropores présente une valeur médiane supérieure à 0,1 µm, et moyennant quoi le diamètre des mésopores présente une valeur médiane entre 2 et 100 nm.

3. Colonne de chromatographie ou cartouche chromatographique comprenant un adsorbant monolithique recouvert selon l'une quelconque des revendications 1 ou 2.

4. Utilisation d'un adsorbant monolithique recouvert selon l'une quelconque des revendications 1 ou 2 lors de la séparation chromatographique d'au moins deux substances.
